# EUROPEAN PATENT SPECIFICATION

(11) **EP 0 562 655 B1**
(45) Date of publication and mention of the grant of the patent: **17.12.1997**
(21) Application number: 93200620.8
(22) Date of filing: 05.03.1993
(51) Int. Cl.: A01K 15/02, A01J 7/00, A01K 1/12, A01K 13/00

(54) **A milking machine for automatically milking animals**
Melkmaschine zum automatischen Melken von Tieren
Machine à traire de traite automatique d'animaux

(30) Priority: 06.03.1992 NL 9200418
(43) Date of publication of application: 29.09.1993
(60) Divisional application: 97200598.7
(73) Proprietor: MAASLAND N.V., 3155 PD Maasland (NL)
(72) Inventor: van der Lely, Cornelis, CH-6300 Zug (CH)
(74) Representative: Mulder, Herman

(56) References cited:
- EP-A- 0 270 165
- EP-A- 0 270 165
- EP-A- 0 309 036
- EP-A- 0 309 036
- DE-A- 1 607 165
- DE-A- 2 340 421
- GB-A- 2 192 351
- NL-A- 8 104 807
- US-A- 3 077 860
- US-A- 4 010 714
- US-A- 4 010 714

## Description

The invention relates to a milking machine for automatically milking animals, such as cows, comprising a milking parlour. With such a milking machine it is important that an animal leaves the milking parlour as soon as possible after having been milked, so that a subsequent animal can enter the milking parlour. In practice it sometimes happens that an animal does not always want to leave the milking parlour voluntarily, so that action is required.

DE-OS 23 40 421 discloses a milking box, which is surrounded by a railing having an entrance door and an exit door. A feed trough is accommodated near the exit door. If an animal wants to enter the milking box, the entrance door is opened and the exit door is closed. Thereafter the entrance door is also closed and fodder is supplied to the animal in the feed trough. After milking, the animal is to leave the box in order to make room for a subsequent animal. It may, however, happen that fodder is still present in the feed trough and the animal might for this reason or another reason refuse to leave the milking box. For this situation the milking box is provided with a railing which blocks access to the feed trough for the animal. When the exit door of the milking box is closed, this railing is in a position in which it rests against the milking box railing. The blocking railing is pivotal about a vertical shaft. Between the railing and the exit door there is a connecting rod which, when the exit door is opened, carries the blocking railing along, so that the feed trough is closed. During closing of the feed trough the animal's head is forced by means of the railing to face the exit, whereafter the animal can leave the milking parlour. Another of these devices is disclosed in documen EP-A-0 270 165.

In spite of the fact that the feed trough is closed by the railing, it is possible in the above-described milking box that the animal still refuses to leave the milking parlour.

The invention has for its object to provide an expelling device for forcing the animal to leave the milking parlour.

According to the invention, this is achieved in that the milking parlour includes detection means, by means of which it can be detected whether an animal has completely or at least parly been removed from the milking parlour, while furthermore computer controlled expelling means for removing an animal from the milking parlour are provided, the expelling means being movable towards an exit of the milking parlour, such that the animal is forced to leave the milking parlour.

Thus, using the detection means, it can be checked whether the animal has left the milking parlour after having opened the exit door or whether the expelling means have achieved the effect aimed at, namely expelling the animal from the milking parlour. In accordance with a still further feature of the invention, the expelling device is movable in the longitudinal direction of the milking parlour. This renders it possible to drive the animal by means of the expelling device to as far as the exit. The said detection means render it also possible, if so desired, to check whether the expelling means must be moved.

For a better understandding of the invention and to show how the same may be carried into effect, an embodiment of an implement for milking animals, such as cows, comprising a milking parlour will now be described by way of example with reference to the accompanying drawings, in which:
Figure 1 shows a milking parlour provided with an expelling implement, as well as a partly cut-away duct provided in the milking parlour;
Figure 2 is a cross-sectional view of the duct taken on the line II-II in Figure 1;
Figure 3 is a side view of the milking parlour, wherein the teat cups are connected to the teats of an animal present in the milking parlour;
Figure 4 is also a side view of the milking parlour, wherein the teats of the animal are post-treated by means of a disinfecting implement and
Figure 5 is a plan view of the milking parlour.

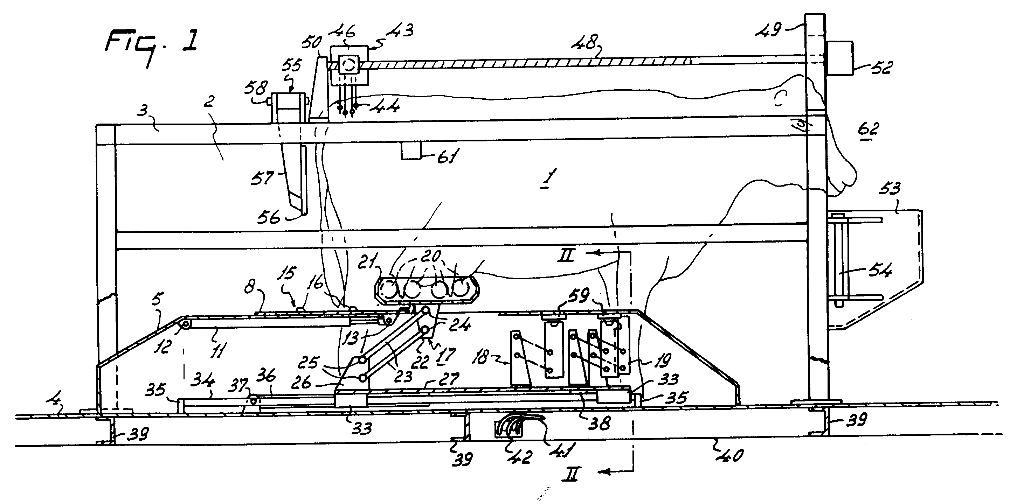

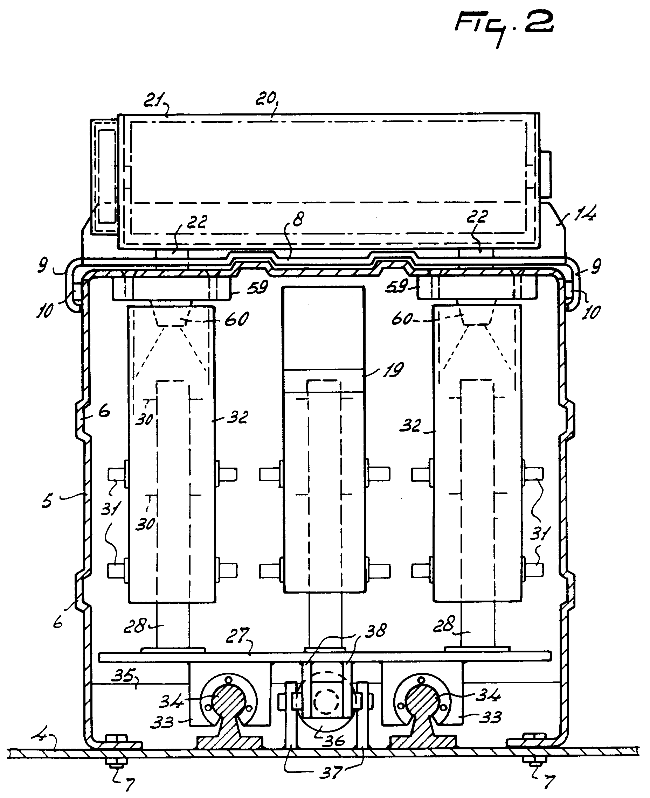

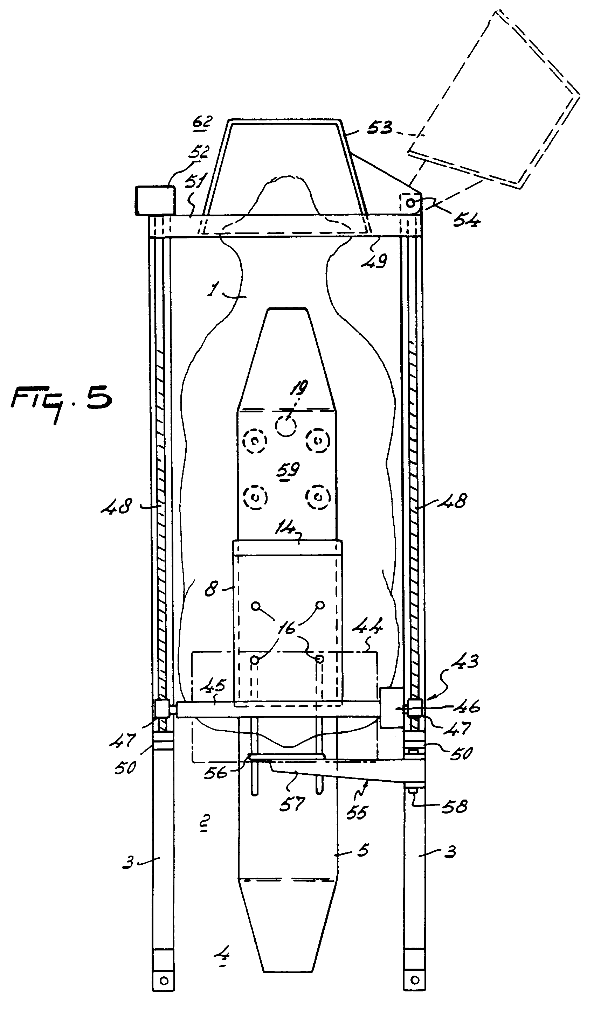

Figure 1 shows in a side elevational view a cow 1 in a milking parlour 2. The milking parlour 2 is surrounded by a railing 3 and has a floor 4. On the floor 4 there is a duct 5 which extends substantially through the overall length of the milking parlour 2. The ends of the duct 5 taper towards the floor 4. Figure 5 shows that the duct 5, taken in the longitudinal direction of the milking parlour 2, is located approximately in the centre plane of the milking parlour 2. In a plan view, the two ends of the duct 5 end in a blunt point. The duct 5 is preferably made of sheet iron provided with a stiffening profile 6 (Figure 2).

Figure 2 is a cross-sectional view of the duct 5, in which it is shown that the walls of the duct 5 are formed by a plate which is folded such as to form a U. The side walls of the duct 5 are provided at the bottom side with a folded-over edge, in which holes are drilled. The duct 5 is bolted to the floor by means of bolts 7 which are inserted through the holes in the folded-over edge. The height and the width of the duct 5 are substantially equal to each other, and amount to approximately 30 cms. It is, however, alternatively possible to choose different dimensions, for example when the duct 5 is used in a milking parlour for, for example, goats.

In the upper wall of the duct 5, near the midway point, there is provided a cover 8 which is movable in the longitudinal direction of the duct 5. The cover 8 extends through the overall width of the duct 5 and, as is shown in Figure 2, has folded-over side edges. The folded-over edge 9 of the cover 8 fits over a strip 10 fastened against the side wall of the duct 5. The strip 10 serves as a guide for the cover 8 which is slidable in the longitudinal direction of milking parlour 2. The strip 10 is preferably made of synthetic resin material. This has the advantage that the friction between the strip 10 and the folded-over metal edge 9 is reduced to a minimum, whilst it is less likely that the animal will hurt itself on the synthetic resin strip 10.

The cover 8 can be moved in the longitudinal direction of the duct 5 by means of a cylinder 11. At one end the cylinder 11 is connected by means of an eye 12 to the interior wall of the duct 5 and the other end is connected by means of an eye 13 to the cover 8. The cylinder 11 may, for example, be a pneumatically or hydraulically operable cylinder. To avoid the possibility that the cow 1 can hurt herself at the leading edge of the cover 8, the leading edge is provided with a rubber shock-absorbing strip 14. The strip 14 also serves as a sealing strip when the cover 8 covers the entrance to the duct 5.

In addition, the cover 8 is provided with a disinfecting implement 15, by means of which the udder and/or teats of the cow 1 can be disinfected. The disinfecting implement 15 comprises four spray heads 16 which are arranged in pairs and remote from each other near the edges of the cover 8. The spray heads 16 move in conjunction with the cover 8 when the operating cylinder 11 of the cover 8 is activated.

The duct 5 accommodates a teat cleaning implement 17, and also a milk cluster 18 and a laser 19. The teat cleaning implement 17 is formed by four profiled rollers 20 which are drivingly supported remote from each other in a container 21. The profiled rollers 20 are driven pairwise and in opposite directions by a motor 22 disposed at the side edge of the container 21. At its bottom side, the container 21 is provided with a support 22, to which two rods 23 are attached in a parallel relationship about horizontal pivot shafts 24. By means of their other ends, the parallel rods 23 are connected capably of pivoting about horizontal shafts 25 to a support 26 accommodated on the bottom plate 27. By means of the parallelogram formed by the rods 23, the teat cleaning implement 17 is movable in height relative to the bottom plate 27. The teat cleaning implement 17 can be moved by means of a cylinder, not shown. The milk cluster 18 is fitted to the bottom plate 27 in a similar manner as the teat cleaning implement 17. To that end, the bottom plate 27 is provided near the two side edges with two supports 28 which are located one after the other on the bottom plate 27. Two parallel and spaced-apart rods 29, which are pivotal about horizontal shafts 30, extend from each support 28. The rods 29 have their other ends connected pivotably about a horizontal shaft 31 to a teat cup 32. In a similar manner as the teat cleaning implement 17, the four teat cups 32 can be moved in height relative to the support 28. The laser 19 is connected to the bottom plate 27 in a similar manner as the teat cups 32. The laser 19 is located in the midway point in front of the two leading teat cups 32. The teat cups 32 are located in front of the teat cleaning implement 17 (taken in the direction from the exit of the milking parlour 2).

It will be obvious that the invention is not limited to the teat cleaning implement 17, milking cluster 18 and laser 19 described in the foregoing, but that it can also be used with other types of teat cleaning implements, milk clusters and detection devices for the determination of the position of the teats of an animal.

In order to provide that after cleaning of the teats by means of the teat cleaning implement 17 the teat cups 32 can be connected to the teats, the teat cups 32 must be moved to under the aperture provided in the duct 5. For that purpose two guide blocks 33 are fitted to the bottom edge of the bottom plate 27, one at each end and remote from each other. The guide blocks 33 bear on two rails 34 extending in the longitudinal direction of the milking parlour 2 on the floor 4. The two rails 34 are provided at their ends with shock absorber plates 35 which constitute the boundary for the guide blocks 33 which are slidable over the rails. The bottom plate 27 can be moved by means of a cylinder 36 in the longitudinal direction of the milking parlour 2 over the rails 34. For that purpose, the cylinder 36 has one end connected to the floor 4 by means of a connecting lug 37, whilst its other end is connected to the bottom plate 27 by means of a further connecting lug 38. The connecting lug 38 is disposed at the bottom side and near the leading edge of the bottom plate 27.

A cleaning implement 59, by means of which the teat cups 32 can be cleaned, are arranged near the leading side of the duct 5 against the upper wall. The cleaning implement 59 comprises four spaced-apart spray heads 60, along which cleaning solution can be sprayed in and/or along the teat cups 32.

The floor 4 is supported by U-beams 39 which are mounted transversely to the longitudinal direction of the milking parlour 2 under the floor 4. The U-beams 39 bear on the bottom 40 of the milking parlour 2. Lines 41, such as milk lines, vacuum lines, rinsing liquid lines etc., are located in the space between the floor 4 and the bottom 40. The lines 41 lead through an aperture, not shown in the drawing, in the floor 4 to the teat cleaning device 17, teat cups 18, cleaning implement 59 and disinfecting implement 15. At the edge of the milking parlour 2, the lines 41 end in a multiple panel 42 which is provided with quick-action couplings for supply lines.

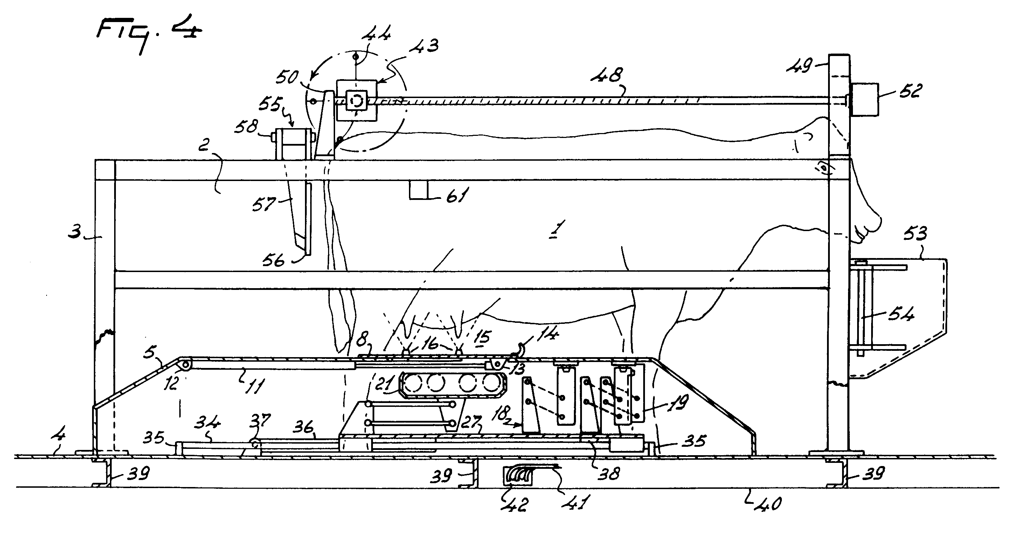

An expelling implement 43, by means of which the cow 1 can be removed from the milking parlour 2, is disposed near the upper side of the railing 3 transversely to the longitudinal direction of the milking parlour 2. As is shown in Figures 4 and 5, the cow expelling implement 43 is formed by whip members 44 which are rotatable about a horizontal shaft. The whip members 44 are fitted on a shaft 45, which shaft 45 is supported at both ends in bearings. The bearings are each accommodated in a housing 47. Near one of the housings 47, a motor 46 is disposed which can cause the horizontal shaft 45 to rotate. The whip members 44 can, for example, be made of leather thongs having at their ends a knot or flexible plastics material rods. The whip members 44 can be mounted such on the shaft 45 that they extend through the overall width of the milking parlour 2, but alternatively through a portion of the shaft 45. The housings 47 are movable along two stubs 48, these stubs being disposed one on each side edge of the railing 3. The stubs 48 have their ends rotatably supported in leading supports 49 and trailing supports 50. The leading supports 49 are disposed on the two leading ends of the railing 3. The trailing supports 50 are disposed at approximately 1/4 of the length of the milking parlour 2, taken in the direction from the rear side of the railing 3. At the front side of the milking parlour 2, a transmission 51 which interconnects the two stubs 48 is arranged between the stubs 48. Each of the leading supports 49 is provided with a motor 52 which can induce the stubs 48 to rotate. As the housings 47 are internally provided with thread, which engages the threaded ends 48, the housings 47 will be moved during rotation of the threaded ends 48 in the longitudinal direction of the milking parlour 2. The trailing supports 50 and the leading supports 49 constitute a stop for the housings 47, which are movable in the longitudinal direction of the milking parlour 2. The railing 3 is furthermore provided with a telemeter 61, by means of which it can be determined whether the cow 1 has left the milking parlour 2. By means of the telemeter 61 it is also possible to measure the distance to the cow 1, which data can be used to control the expelling device 43 (the shaft 45 carrying the whip members 44 can, if necessary, be brought up to the cow 1, if, for example, the cow stops halfway on leaving the milking parlour 2). The telemeter 61 may, for example, be an ultrasonic sensor, a light cell or a laser.

In addition, the leading side of the milking parlour 2 is provided with an exit door 62, to which a feed trough 53 is rigidly connected. The exit door 62 is pivotal about a vertical pivot shaft 54 located near the corner pole of the railing 3.

Disposed near the trailing support 50 is a retaining member 55, by means of which the cow 1 can be enclosed between the exit door 62 and the retaining member 45. The retaining member 55 comprises a plate 56 located in a vertical plane transversely to the longitudinal direction of the milking parlour 2 behind the cow 1 and in the centre of the milking parlour 2. The plate 56 measures approximately 50 by 50 cms. An arm 57, which extends obliquely upwardly to above the railing 3, is disposed at the rear side of the plate 56. The end of the arm 57 is pivotal about a horizontal shaft 58 extending in the longitudinal direction of the milking parlour 2. The horizontal shaft 58 is clamped between two strips which are fastened in the vertical direction on the railing 3. The plate 56 can be swung away in the vertical direction of the milking parlour 2 about the horizontal shaft 58 by means of a cylinder, not shown in the drawing.

The implement is further provided with a computer, not shown, by which the cylinders, motors, sensors, and automatic feeder of the implement can be controlled.

The above-described implement operates as follows:

Before the cow 1 enters the milking parlour, the retaining member 55 is hinged upwards, allowing free access to the milking parlour 2. The aperture in the duct 5 is closed by means of the cover 8. The cow 1 enters the milking parlour 2 and walks to as far as the exit door 62, where the cow 1 is fed via the feed trough 53. Thereafter the plate 56 is swivelled to behind the cow 1. As a result thereof, the cow 1 is bounded at its front side by the exit door 62 and at its rear side by the retaining member 55, while the railing 3 bounds the cow 1 on both sides. At the bottom side, the duct 5 forces the legs of the cow 1 to a certain spread position.

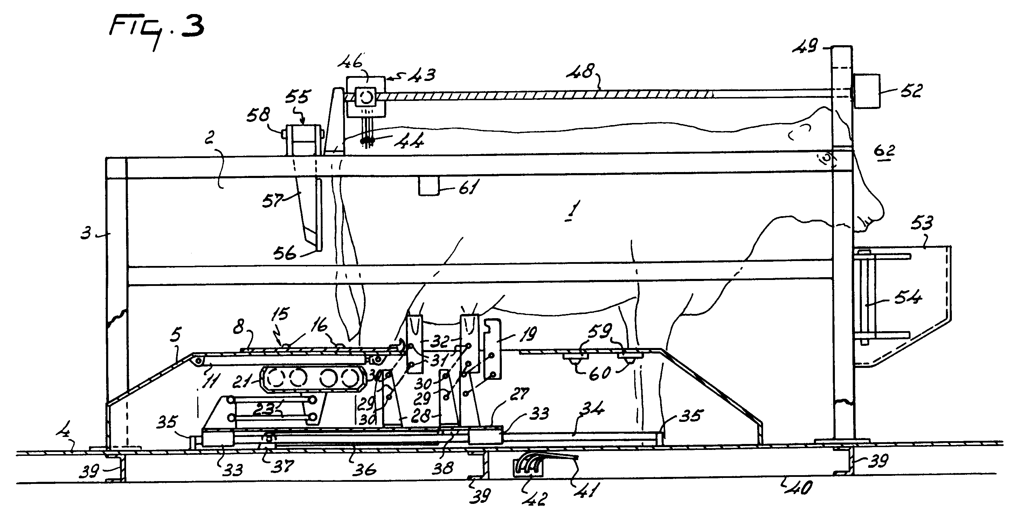

After the cow 1 has been supplied with fodder, the cover 8 is slid to the rear by energizing the cylinder 11, so that the aperture in the duct 5 is opened. Thereafter, as is shown in Figure 1, the teat cleaner 17 is moved to the teats of the cow 1 and the teats are cleaned by the profiled rollers 20. After the teats have been adequately cleaned, the teat cleaner 17 is retracted in the duct 5. Thereafter the cylinder 36 is energized and the bottom plate 27 is pulled to the rear over the rails 34. This causes the milk cluster 18 and also the laser 19 to be moved under the aperture in the duct 5. The laser 19 is raised through the aperture in the duct 5 and thereafter the position of the teats is determined by the laser 19. As soon as the teats have been located, the teat cups 32 are moved to the teats and connected thereto (Figure 3). After the milking operation has ended, the teat cups 32 are withdrawn into the duct 5 and the cover 8 is moved forwards by activation of cylinder 11, so that the aperture in the duct 5 is closed. By energizing the cylinder 36, the teat cups 32 are moved forwards to under the teat cup cleaner. Thereafter the teat cups 32 are connected to the spray heads 60 of the cleaning implement 59 and are rinsed thereby until they are clean.

After the milking has ended, the teats of the cow 1 are sprayed with an disinfectant by the disinfecting implement 15 mounted on the cover 8. Thereafter the exit door 62 is pivoted away by a cylinder, not shown, about the vertical shaft 54, so that the exit of the milking parlour 2 is opened. So the cow 1 can voluntarily leave the milking parlour 2. By means of the telemeter it is checked whether the cow 1 indeed leaves the milking parlour 2. Should this not be the case, then the expelling implement 43 is activated. The motor 46 then drives the horizontal shaft 45, so that the whip members 44 start hitting the cow 1 on her back. By means of the telemeter 61 it is checked whether the cow 1 leaves the milking parlour 2 completely. Should it be that the cow 1 stops, for example halfway, this is reported by the telemeter 61 and the motor 52 is started, whereafter the expelling implement 43 is moved up to the cow 1 until the whip members 44 hit the cow 1. This is continued until the cow 1 has left the milking parlour 2. After the cow 1 has left the milking parlour 2, the exit door 62 closes the exit and the expelling implement 43 is returned to the rearmost supports 50 and the plate 56 is pivoted upwardly. The milking parlour 2 is thereafter ready to receive a subsequent animal.

## Claims

1. A milking machine for automatically milking animals, such as cows, comprising a milking parlour (2), characterized in that the milking parlour (2) includes detection means (61), by means of which it can be detected whether an animal (1) has completely or at least partly been removed from the milking parlour (2), while furthermore computer controlled expelling means (43) for removing an animal (1) from the milking parlour (2) are provided, the expelling means (43) being movable towards an exit of the milking parlour (2), such that the animal (1) is forced to leave the milking parlour (2).

2. A milking machine as claimed in claim 1, characterized in that the expelling means (43) comprises a rotating whip.

3. A milking machine as claimed in any one of the claims 1 or 2, characterized in that the expelling means (43) comprises rotating whip members which in response to the centrifugal force assume a radially outwardly extending position.

4. A milking machine as claimed in any one of the preceding claims, characterized in that the detection means (61) determine the distance between an animal (1) and the milking parlour (2).

5. A milking machine as claimed in any one of the preceding claims, characterized in that the expelling means (43) are movable in the longitudinal direction of the milking parlour (2).

6. A milking machine as claimed in any one of the preceding claims, characterized in that the expelling means (43) are moved by means of one or more driven threaded spindles (4).

## Patentansprüche

1. Melkmaschine zum automatischen Melken von Tieren, wie z. B. von Kühen, mit einem Melkstand (2),
dadurch gekennzeichnet, daß der Melkstand (2) eine Überwachungseinrichtung (61) aufweist, mittels der zu überwachen ist, ob ein Tier (1) ganz oder zumindest teilweise aus dem Melkstand (2) ausgetrieben wurde, wobei außerdem eine rechnergesteuerte Austreibevorrichtung (43) zum Austreiben eines Tieres (1) aus dem Melkstand (2) vorgesehen ist, die in Richtung auf einen Ausgang des Melkstandes (2) zu bewegen ist, so daß das Tier (1) gezwungen ist, den Melkstand (2) zu verlassen.

2. Melkmaschine nach Anspruch 1,
dadurch gekennzeichnet, daß die Austreibevorrichtung (43) eine rotierende Peitsche aufweist.

3. Melkmaschine nach einem der Ansprüche 1 oder 2,
dadurch gekennzeichnet, daß die Austreibevorrichtung (43) rotierende Peitschenglieder aufweist, die aufgrund der Zentrifugalkraft eine radial nach außen gerichtete Lage einnehmen.

4. Melkmaschine nach einem der vorhergehenden Ansprüche,
dadurch gekennzeichnet, daß die Überwachungseinrichtung (61) den Abstand zwischen einem Tier (1) und dem Melkstand (2) überwacht.

5. Melkmaschine nach einem der vorhergehenden Ansprüche,
dadurch gekennzeichnet, daß die Austreibevorrichtung (43) in Längsrichtung des Melkstandes (2) bewegbar ist.

6. Melkmaschine nach einem der vorhergehenden Ansprüche,
dadurch gekennzeichnet, daß die Austreibevorrichtung (43) mittels einer oder mehrerer angetriebener Gewindespindeln (4) bewegt wird.

## Revendications

1. Machine à traire de traite automatique d'animaux, tels que des vaches, comprenant une stalle de traite (2),
**caractériséé** en ce que la stalle de traite (2) comporte des moyens de détection (61) permettant de détecter si un animal (1) a été complètement ou au moins partiellement chassé hors de la stalle de traite (2), tandis que sont prévus en outre des moyens d'expulsion (43) pour chasser un animal (1) hors de la stalle de traite (2), les moyens d'expulsion (43) étant mobiles vers une sortie de la stalle de traite (2), de telle sorte que l'animal (1) est forcé de quitter la stalle de traite (2).

2. Machine à traire selon la revendication 1, caractérisée en ce que les moyens d'expulsion (43) comprennent un fouet rotatif.

3. Machine à traire selon l'une ou l'autre des revendications 1 ou 2, caractérisée en ce que le moyen d'expulsion (43) comprend des organes à fouet rotatifs qui prennent, en réponse à la force centrifuge, un position s'étendant radialement vers l'extérieur.

4. Machine à traire selon l'une quelconque des revendications précédentes, caractérisée en ce que les moyens de détection (61) déterminent la distance entre un animal (1) et la stalle de traite (2).

5. Machine à traire selon l'une quelconque des revendications précédentes, caractérisée en ce que les moyens d'expulsion (43) sont mobiles dans le sens longitudinal de la stalle de traite (2).

6. Machine à traire selon l'une quelconque des revendications précédentes, caractérisée en ce que les moyens d'expulsion (43) sont déplacés au moyen d'une ou plusieurs tiges filetées (4) entraînées.
